# EUROPEAN PATENT APPLICATION

(11) **EP 2 416 539 A1**
(43) Date of publication of application: **08.02.2012**
(21) Application number: 11006397.1
(22) Date of filing: 03.08.2011
(51) Int. Cl.: H04L 29/06, H04L 29/12, H04M 1/60

(54) **Method of performing multiple connection and related communication device**

(30) Priority: 04.08.2010 US 370467 P
(71) Applicant: HTC Corporation, Taoyuan County 330 (TW)
(72) Inventor: Yang, Ju-Ting, Taoyuan City Taoyuan County 330 (TW); Chien, Ho-Sung, Taoyuan City Taoyuan County 330 (TW)
(74) Representative: Schmidbauer, Andreas Konrad

(57) **Abstract**

A method of performing multiple connections for a vehicle head unit in a telematic system is disclosed. The method comprises assigning at least one internet protocol (IP) address to at least one mobile device (MD); and connecting to the least one MD.

## Description

### Cross Reference To Related Applications

### 1. Field of the Invention

The application relates to a method and a related communication device, and more particularly, to a method of performing multiple connections and related communication device in a telematics system.

### 2. Description of the Prior Art

In the modern world, more and more devices are getting portable due to the efforts in micro electronic and the increasing capacity of batteries. Because of the increasing number of such devices and the constantly growing feature list, Mobile Devices (MDs) are entering more and more domains even in the daily life. There is no wonder that the wish comes up to have the same applications from the PC at home or at work wherever you are. Having the possibility to use these applications on a MD is quite good with a small display and probably complicated input devices like tiny, multiple occupied buttons. But having them in the vehicle environment on the large screen of the Infotainment System (IS) and using the comfortable vehicle' s control concept is even better. The term of integrating MDs in the vehicle environment means to provide the user the technology to take his MD into his car and let it integrate itself without the need of configuration.

The common initiative Consumer Electronics for Automotive (CE4A) driven by Audi, BMW, Daimler, Porsche, and Volkswagen has been formed to facilitate seamless integration and interoperability of CE devices in a vehicular environment. To account for the various infotainment and communication use cases, the CE4A is structured into Expert Groups (EG). Currently, EGs are operative for Telephone, Media, PIM, Navigation, Terminal Mode, Standard Connector, Legal Form and Reference Implementation. CE4A wants to pave the way to meet our customer's expectations with automotive-friendly integration and a wide interoperability of CE devices. In order to achieve this we opt for a synergetic reuse of all device capabilities with a well-defined and stable standardized interface to the car.

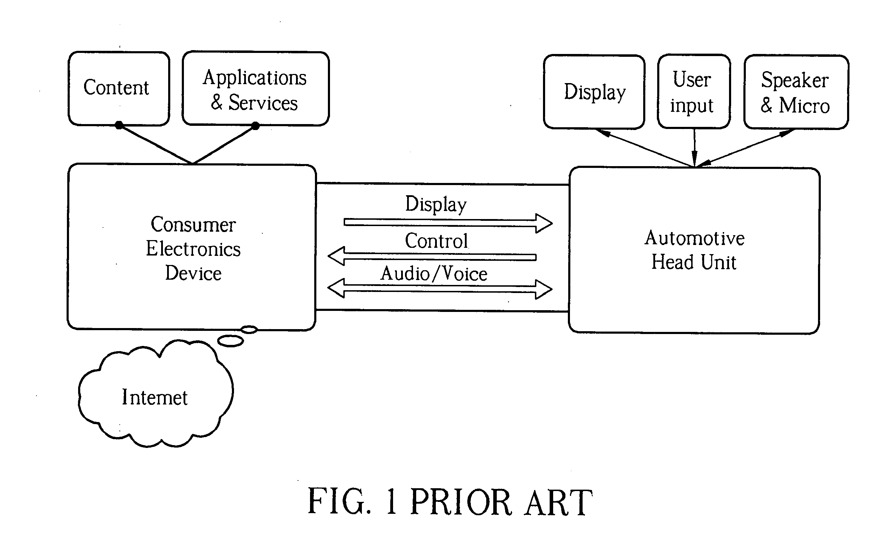

The Expert Group Terminal Mode is working on an approach for the standardized transparent and use-case-independent integration of mobile device applications. In CE4A Terminal Mode architecture specification, the Terminal Mode provides a concept for integrating the mobile device (MD, hereinafter referred to as the "Terminal Mode Server") and the vehicle head-unit (hereinafter referred to as the
"Terminal Mode Client"). In a Terminal Mode context, the control and interaction of applications and services running on the mobile device will be replicated into the car environment. Diverting display and audio output to the car head-unit come together with receiving key and voice control input from it are the main interaction streams, as shown in FIG.1. FIG.1 is a schematic diagram of a terminal mode concept in the prior art. In FIG.1, a user in a car control or interact with applications and services of consumer electronics device through display, user input or speaker of an automotive head unit.

Dynamic Host Configuration Protocol (DHCP) is an automatic configuration protocol used on IP networks. Computers that are connected to the IP networks must be configured before they can communicate with other computers on the network. DHCP allows a computer to be configured automatically, eliminating the need for intervention by a network administrator. It also provides a central database for keeping track of computers that have been connected to the network. This prevents two computers from accidentally being configured with the same IP address.

DHCP automates network-parameter assignment to network devices from one or more DHCP servers. Even in small networks, DHCP is useful because it makes it easy to add new machines to the network. When a DHCP client (a computer or any other network-aware device) connects to a network, the DHCP client sends a broadcast query requesting necessary information from a DHCP server. The DHCP server manages a pool of IP addresses and information about client configuration parameters such as default gateway, domain name, the name servers, other servers such as time servers, and so forth. On receiving a valid request, the DHCP server assigns the computer an IP address, a lease (length of time the allocation is valid), and other IP configuration parameters, such as the subnet mask and the default gateway.

Based on Terminal Mode Networking and Transport Stack, DHCP is used by the terminal mode client (e.g. DHCP client) to obtain configuration information for operation in an IP network from the terminal mode server (e.g. DHCP server). Assume there are already DHCP Client (Vehicle Head-unit) and DHCP Server (e.g. mobile device) interacting with each other. When there is another new mobile device coming into the car, the Vehicle Head-unit (already acting as DHCP Client) will not be able to interact with the new mobile device, because of vehicle head-unit original IP configuration was already configured by first mobile device. This means vehicle head-Unit cannot interwork with the new mobile device even if the new mobile device has better/fancier functionality.

In this case, vehicle head-unit disconnects (e.g. DHCP Client disconnects from DHCP Server) with the first mobile device, and obtain configuration information for operation in an IP network from the new mobile device. This means vehicle head-unit cannot interwork with the first mobile device from now on. In other words, this indicates Vehicle Head-Unit cannot interwork with the first mobile device and the new mobile device simultaneously.

### Summary of the Invention

A method of performing multiple connections in a wireless communication system is provided.

A method of performing multiple connections for a vehicle head unit in a telematic system is disclosed. The method comprises assigning at least one internet protocol (IP) address to at least one mobile device (MD); and connecting to the at least one MD.

A communication device for performing multiple connections in a telematic system is disclosed. The communication device comprises means for assigning at least one IP address to at least one MD; and means for connecting to the at least one MD.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of a terminal mode concept in the prior art.

FIG.2 is a schematic diagram of an exemplary telematic system.

FIG.3 is a schematic diagram of an exemplary communication device.

FIG.4 is a flow chart of an exemplary process.

FIG.5 and FIG.6 illustrate exemplary interactions between a vehicle head-unit and multiple mobile devices.

### Detailed Description

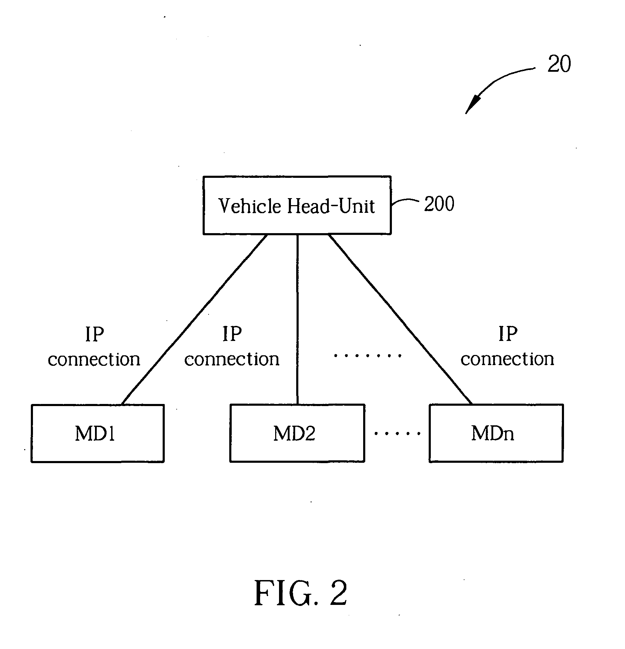

Please refer to FIG.2, which is a schematic diagram of a telematic system 20. The telematics system 20 includes a vehicle head-unit 200 and multiple mobile devices (MDs) MD1, MD2,...MDn. The MDs MD1, MD2,...MDn include but not limited to mobile phones, Personal Digital Assistants (PDA), Audio-/Video-Player, Personal Navigation Devices (PNDs), laptops and every device which provides information to the user, which is small enough to get carried around and which is at least temporarily battery driven. The communications between the vehicle head-unit 200 and the MDs MD1, MD2,...MDn comply with Dynamic Host Configuration Protocol (DHCP). DHCP is an automatic configuration protocol used on internet protocol (IP) networks. Electronic devices (e.g. vehicle head-unit 200 or MDs MD1, MD2,...MDn) connected to the IP networks must be configured before they can communicate with other electronic devices on the network. A DHCP client sends a broadcast query requesting necessary information from a DHCP server. On receiving a valid request, the DHCP server assigns the computer an IP address, a lease (length of time the allocation is valid), and other IP configuration parameters, such as a subnet mask and a default gateway. According to the present invention, the vehicle head-unit 200 works as the DHCP server and the MDs MD1, MD2,...MDn work as the DHCP clients.

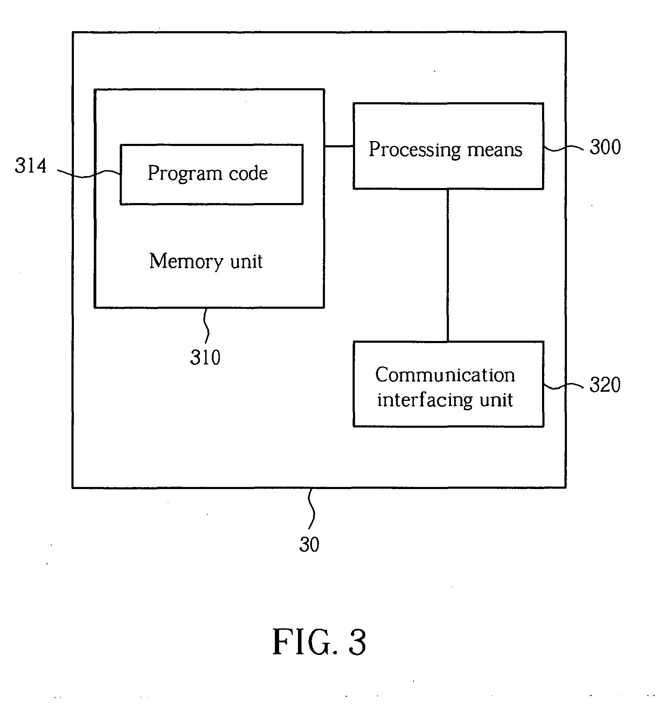

Please refer to FIG.3, which is a schematic diagram of an exemplary communication device 30. The communication device 30 can be the vehicle head-unit 200 or the MDs MD1, MD2, ...MDn shown in FIG.2 and may include a processing means 300 such as a microprocessor or ASIC, a memory unit 310, and a communication interfacing unit 320. The memory unit 310 may be any data storage device that can store program code 314 for access by the processing means 300. Examples of the memory unit 310 include but are not limited to a subscriber identity module (SIM), read-only memory (ROM), random-access memory (RAM) and optical data storage devices. The communication interfacing unit 320 is preferably a radio transceiver for wirelessly communicating with other communication devices according to processing results of the processing means 300.

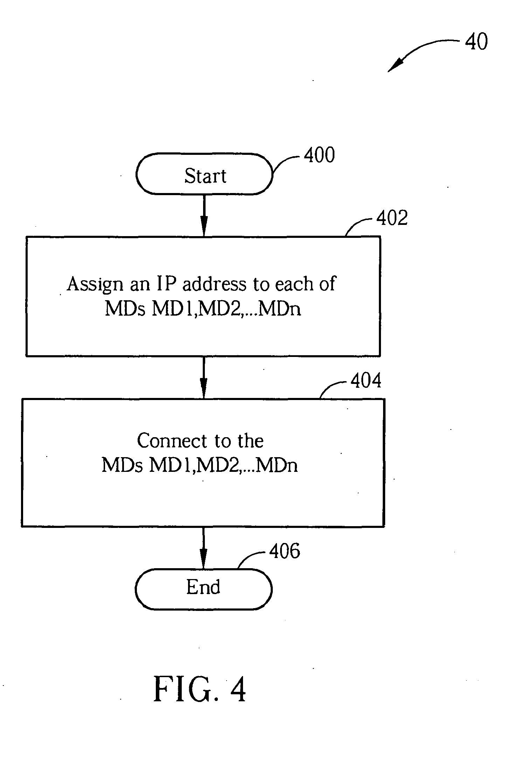

Please refer to FIG.4, which is a flow chart of an exemplary process 40. The process 40 is used for performing multiple connections for the vehicle head-unit 200 in the telematic system 20. The process 40 can be complied into program code 314 and includes the following steps:

Step 400: Start.

Step 402: Assign an IP address to each of MDs MD1,MD2,...MDn.

Step 404: Connect to the MDs MD1,MD2,...MDn.

Step 406: End.

According to the process 40, the vehicle head-unit 200 assigns the IP address to each of the MDs MD1, MD2,...MDn and connects to each MD. In other words, the vehicle head-unit 200 works as the DHCP server and the MDs MD1, MD2,...MDn work as the DHCP clients. When the multiple MDs MD1, MD2,...MDn enter a car, each of the multiple MDs MD1, MD2,...MDn can obtain configuration information for operation in the IP network from the vehicle head-unit 200. The vehicle head-unit communicates with multiple MDs MD1, MD2,...MDn via IP connection. Thus the vehicle head-unit can inter-work with all MDs MD1, MD2,...MDn in the car simultaneously.

On the other hand, while there are multiple MDs MD1, MD2, ...MDn (e.g. as DHCP clients) already configured by the vehicle head-unit 200 and connected to the vehicle head-unit inside the car, users in the car control or interact with the applications (e.g. game, navigation apps) or programs of these MDs MD1, MD2,...MDn through touch screen, knobs or bottoms, speaker, speech Dialogue System, remaining user input/output function keys in the car. Namely, the vehicle head-unit 200 is able to display or run the applications and programs of the MDs MD1, MD2,...MDn. Besides, in a more flexible way, the vehicle head-unit 200 has a user interface which provides the first application from one MD (e.g. MD1) and the second application from another MD (e.g. MD2) to a user to interact.

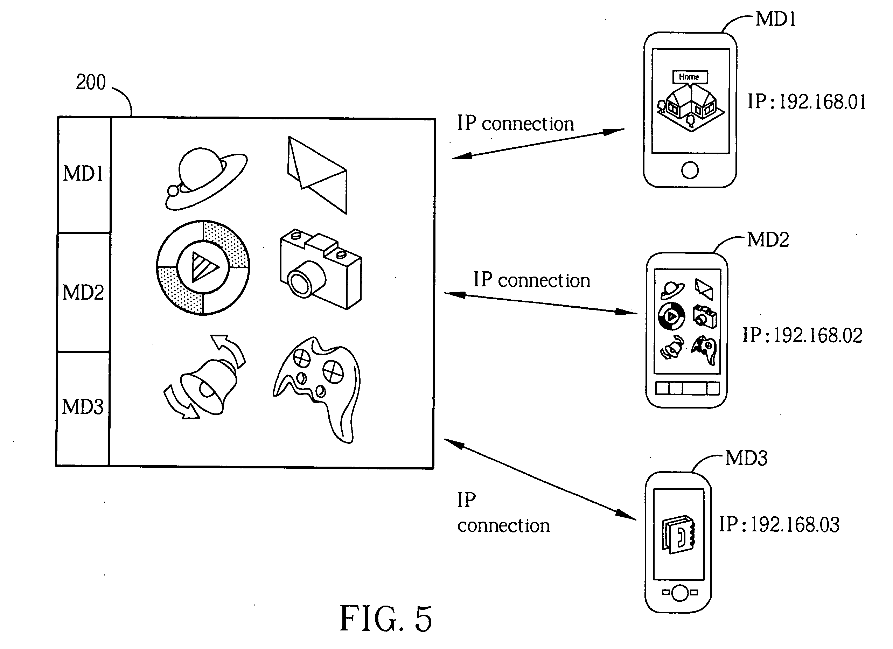

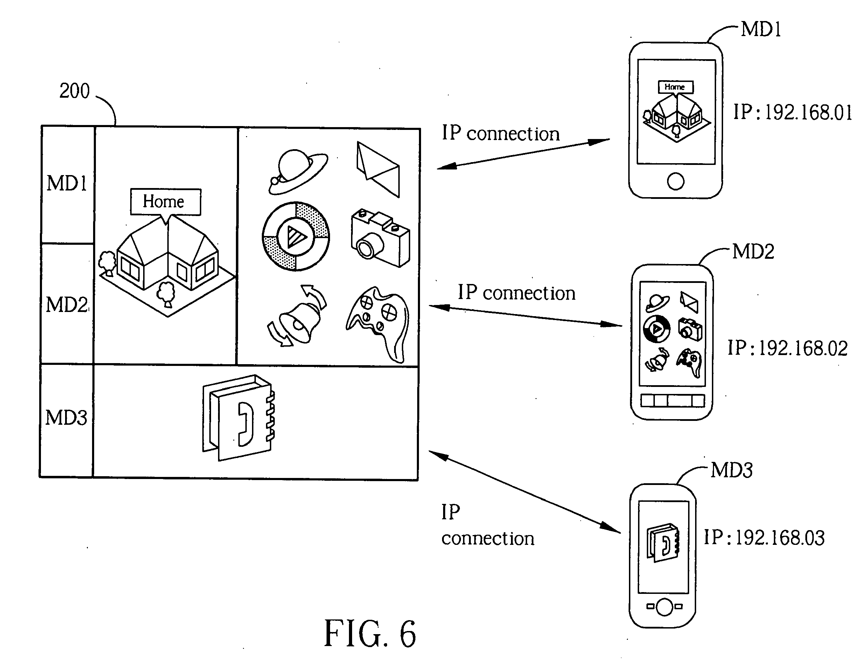

Please refer to FIG.5 and FIG.6, which illustrate exemplary interactions between the vehicle head-unit 200 and the multiple MDs MD1, MD2 and MD3. In FIG.5, the vehicle head-unit 200 assigns the IP address to each of the MDs MD1, MD2, and MD3. For example, IP address: 192.168.01 is assigned to the MD MD1; IP address: 192.168.02 is assigned to the MD MD2; IP address: 192.168.03 is assigned to the MD MD3. A user in a car chooses the MD MD2 on the vehicle head-unit 200. Therefore, what is displayed on the screen of the MD MD2 will be displayed on the main screen of the vehicle head-unit 200 as well. Each of the MDs MD1, MD2 and MD3 is assigned to an IP address and connected to the vehicle head-unit 200 through DHCP. In FIG.6, the vehicle head-unit 200 may have split screen function. Likewise, IP address: 192.168.01 is assigned to the MD MD1; IP address: 192.168.02 is assigned to the MD MD2; IP address: 192.168.03 is assigned to the MD MD3. The user in the car can interact with all 3 MDs MD1, MD2 and MD3. The screens of the MDs MD1, MD2 and MD3 are all displayed on the main screen of the vehicle head-unit 200. The vehicle head-unit 200 may choose the preferably application and entertainment from one of the MDs.

In some examples, the MD MD1 may support cellular technology (e.g. CMDA, GSM/GPRS, UMTS or LTE) and connects to vehicle head-unit 200. When the MD MD1 has an incoming event (e.g. incoming call or reception of SMS/MMS), the MD MD1 sends a notification N1 to the vehicle head-unit 200. The vehicle head-unit 200 indicates or displays the notification N1 on the screen or makes a sound to notify the user. As a result, the user can be aware of the incoming event and take corresponding action, e.g. answer the incoming call or read the SMS/MMS (short message service/multimedia message service) via the screen or a button of the vehicle head-unit 200. In addition, the MD MD2 supporting cellular technology may connect to the vehicle head-unit 200 simultaneously. The MD MD2 sends a notification N2 to the vehicle head-unit 200. The vehicle head-unit 200 receives both of the notifications N1 and N2 from the MDs MD1 and MD2, respectively.

The vehicle head-unit 200 indicates or displays the notifications N1 and N2 both on the screen or makes a sound. For example, if the vehicle head 200 receives the notifications N1, the vehicle head 200 makes a ring tone R1 to notify the user that the notification N1 is being received from MD MD1. If the vehicle head 200 receives the notifications N2, the vehicle head 200 makes a ring tone R2 to notify the user that the notification N2 is being received from MD MD2. Such that the user can distinguish the notifications N1 and N2 from different MDs via the different ring tones. Or the vehicle head 200 may displays which MD the notification is coming from on its screen. It should be noted that in other embodiments, the vehicle head-unit 200 can take any way (such as the pop-up window) to notify the users that the notification N1 is being received from MD MD1 and the notification N2 is being received from MD MD2.

According to examples, each time when a MD enters car, the MD (i.e. DHCP client) is connected to the vehicle head-unit 200 (i.e. DHCP server). When the connection is established, the corresponding indication icon of this MD will then be displayed to the vehicle head-unit 200 (For example, the car's touch screen.) The vehicle head-unit 200 can interact with each MD as mentioned above, and then choose the preferable MD for desirable application and entertainment.

The vehicle head-unit 200 can choose which incoming call from these MDs to take, by touching its corresponding indication icon of each MD on the touch screen when there are several incoming calls from each MD simultaneously.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 30 in which the processing means 300 processes the program code 314 related to the abovementioned processes and the processed results can perform multiple connections in the telematic system 20.

To sum up, when multiple MDs enter a car each of MDs can obtain configuration information for operation in an IP network from a vehicle head-unit. The vehicle head-unit works as a DHCP server, assigning an IP address to each MD. Thus, the vehicle head-unit can interwork with all MDs in the car simultaneously. When there are several incoming calls from each MD simultaneously, the vehicle head-unit can display or indicates the incoming calls. Further, the vehicle head-unit may choose the preferably incoming call from one of the MDs.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of performing multiple connections for a vehicle head unit in a telematic system, the method comprising:
assigning at least one internet protocol (IP) address to at least
one mobile device (MD); and
connecting to the at least one MD.

2. The method of claim 1 further comprising displaying or running a plurality applications of the at least one MD on the vehicle head unit.

3. The method of claim 1 further comprising providing a first application from a first MD and a second application from a second MD to a user to interact.

4. The method of claim 1 further comprising:
receiving a first notification from a first MD; and
indicating or displaying the first notification on the vehicle head unit;
wherein, the first notification is related to a first call event.

5. The method of claim 4 further comprising:
receiving a second notification from a second MD; and
indicating or displaying the first notification and the second
notification on the vehicle head unit;
wherein, the first notification is related to a second call event.

6. The method of claim 1, wherein the vehicle head unit and the at least one MD comply with a dynamic host configuration protocol (DHCP).

7. A communication device for performing multiple connections in a telematic system, the communication device comprising:
means for assigning at least one internet protocol (IP) address
to at least one mobile device (MD); and
means for connecting to the at least one MD.

8. The communication device of claim 7 further comprising means for displaying or running a plurality applications of the at least one MD on the vehicle head unit.

9. The communication device of claim 7 further comprising providing a first application from a first MD and a second application from a second MD to a user to interact.

10. The communication device of claim 7 further comprising:
means for receiving a first notification from a first MD; and
means for indicating or displaying the first notification on the vehicle head unit;
wherein, the first notification is related to a first call event.

11. The communication device of claim 10 further comprising:
means for receiving a second notification from a second MD; and
means for indicating or displaying the first notification and the
second notification on the vehicle head unit;
wherein, the first notification is related to a second call event.

12. The communication device of claim 1, wherein the vehicle head unit and the at least one MD comply with a dynamic host configuration protocol (DHCP).
